# EUROPEAN PATENT SPECIFICATION

(11) **EP 3 305 051 B1**
(45) Date of publication and mention of the grant of the patent: **09.03.2022**
(21) Application number: 17194359.0
(22) Date of filing: 02.10.2017
(51) Int. Cl.: A01B 63/108

(54) **FRONT LIFTING DEVICE FOR A WORK MACHINE AND A WORK MACHINE**
FRONTHUBVORRICHTUNG FÜR EINE ARBEITSMASCHINE SOWIE EINE ARBEITSMASCHINE
DISPOSITIF DE LEVAGE FRONTAL POUR UNE MACHINE DE TRAVAIL ET MACHINE DE TRAVAIL

(30) Priority: 05.10.2016 FI 20165741
(43) Date of publication of application: 11.04.2018
(73) Proprietor: LH Lift Oy, 41370 Kuusa (FI)
(72) Inventor: VIIKKI, Timo, 41370 KUUSA (FI)
(74) Representative: Kespat Oy

(56) References cited:
- EP-A1- 1 609 345
- EP-A1- 2 457 428
- WO-A1-2008/046958
- US-A- 5 697 454

## Description

The invention relates to a front lifting device of a work machine, which includes
- a support frame, by which the front lifting device is to be attached to the chassis of the work machine,
- a rotating frame fitted to the support frame rotatably in the horizontal direction,
- a first and a second lifting arm at a distance from each other laterally pivoted to the rotating frame by means of horizontal pivots in order to permit the vertical movement of the lifting arms,
- first operating devices for rotating the rotating frame,
- second operating devices connected to the lifting arms in order to lift the lifting arms,
- control means for controlling the operating power to the first and second operating devices.

In addition, the invention also relates to a work machine.

Various front lifting devices intended for the front of a tractor are known from the prior art. One such is disclosed in the international patent application publication WO 2008/046958 A1. Such a front lifting device includes a support frame, a rotating frame, lifting arms, and hydraulic cylinders for operating the lifting arms.

The front lifting device is attached to the tractor by a support frame, to which the rotating frame is rotatably pivoted laterally by means of a vertical shaft. The lifting arms are, in turn, pivoted rotatably to the rotating frame. For lifting of the lifting arms, each has attached to it its own hydraulic cylinder. At the opposite end, the hydraulic cylinders are attached to the rotating frame. By means of the pulling movement created by the hydraulic cylinders to lifting arms are made to rise.

In order to turn the lifting arms laterally a hydraulic operating device is attached to the rotating frame. By means of it, the rotating frame and thus also the lifting arms arranged in it, can be rotated laterally. One operation where such rotation is needed is, for example, snow ploughing to be performed using a wide solid-blade plough or bow-mowing to be performed using a front mower. Yet another publication disclosing the prior art that can be referred to is European patent application number EP 2457428 A1.

The invention is intended to create a front lifting device of a work machine and a work machine that are simpler in construction. The characteristic features of the invention are stated in Claims 1 and 13.

Owing to the invention, the vertical lifting of the lifting arms and addition their horizontal rotation can be performed using one and the same operating devices.

According to one embodiment, the control of the lifting arms can be implemented using a 6/2 directional control valve and a control valve connected after it. This permits a simple valve implementation of the invention.

The operating devices, by which the lifting arms are lifted and also rotated, can be attached to the lifting arms and support frame in many different ways. Here it is possible to use a ball-and-socket joint implemented, for example, using a ball joint or a universal joint. Other additional advantages achieved by means of the invention are stated in the description portion and its characteristic features in the accompanying Claims.

The invention, which is not restricted to the embodiment presented in the following, is described in greater detail with reference to the accompanying figures, in which
- Figure 1: shows a schematic bottom view of a tractor equipped with a front lifting device according to the invention, when the rotating frame is rotated,
- Figure 2: shows an example of the front lifting device separated from the work machine,
- Figure 3: shows the front lifting device of Figure 2 without the rotating frame,
- Figure 4: shows the front lifting device of Figure 2 without the support frame,
- Figure 5: shows a bottom view of the front lifting device of Figure 2,
- Figure 6: shows a top view of the front lifting device of Figure 2 when the lifting arms are rotated laterally,
- Figure 7: shows an example of the control means for operating the lifting arms and lifting them when they are in the holding position,
- Figure 8: shows the control means of Figure 7 when the lifting arms are in the lifting position,
- Figure 9: shows the control means of Figure 7 for rotating the lifting arms laterally to a first side,
- Figure 10: shows the control means of Figure 7 for rotating the lifting arms laterally to a second side, and
- Figure 11: shows a second embodiment of the piping of the hydraulic cylinders for the control of the lifting arms seen as a top view of the front lifting device.

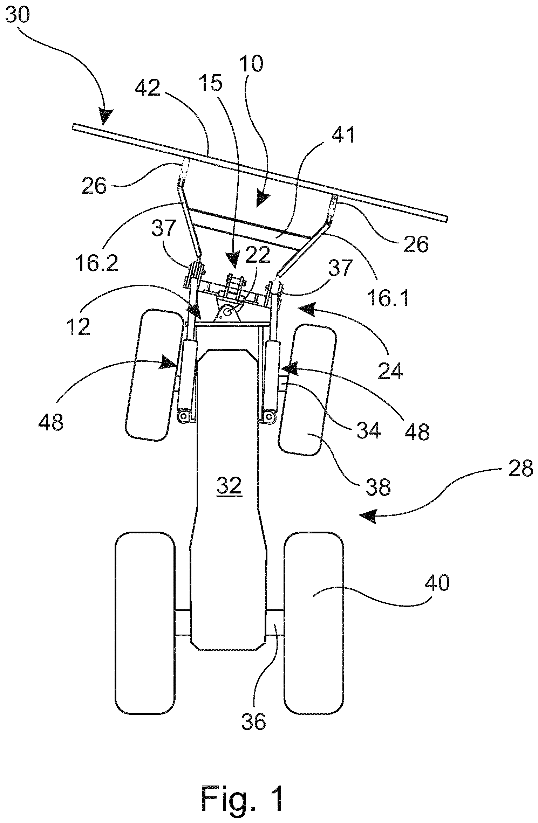

Figure 1 shows schematically an example of one work machine 28, being now a tractor, with the rotating frame 24 of the front lifting device 10 rotated horizontally. Figure 1 is a view from underneath. Here the tractor is shown schematically by only the chassis 32, the front axle 34, the rear axle 36, the front tyres 38, the rear tyres 40, and the front lifting device 10. As basic components, the front lifting device 10 includes a support frame 12, a rotating frame 24, the lifting arms 16.1, 16.2, and the operating devices 48 for operating the lifting arms 16.1, 16.2.

The front lifting device 10 is to be attached to the chassis 32 of the work machine 28 by the support frame 12. The rotating frame 24 is fitted rotatably in the horizontal direction to the support frame 12 in connection with one of its ends. The front lifting device 10 includes first operating devices 48 for rotating the rotating frame 24. The rotating frame 24 is attached to the support frame 12 by means of a vertical shaft 22.

The first and second lifting arms 16.1, 16.2 belonging to the front lifting device 10 are in turn fitted to the rotating frame 24. The lifting arms 16.1, 16.2 are equipped with a coupling clamps 26 for attaching an implement 30 to the lifting arms 16.1, 16.2 of the front lifting device 10. Thus the implement 30 can be attached to the front lifting device 10 by the coupling clamps 26. The first and second lifting arms 16.1, 16.2 are at a distance from each other in the lateral direction. Between them is a connecting bar 41 joining them together. In addition, the first and second lifting arms 16.1, 16.2 are pivoted to the rotating frame 24 by a horizontal pivots 37 in order to permit the vertical movement of the lifting arms 16.1, 16.2. For this purpose, the front lifting device 10 includes second operating devices 48 attached to the lifting arms 16.1, 16.2, in order to lift the lifting arms 16.1, 16.2. In addition, the front lifting device 10 also includes control means 11 for directing the operating power to the first and second operating devices 48.

The rotating frame 24, and thus also the lifting arms 16.1, 16.2 attached to it, can be rotated horizontally relative to the tractor's chassis 32 using the first operating devices 48. The term horizontal refers here to the horizontal, i.e. transverse direction of the tractor's chassis 32. The implement 30 then turns horizontally relative to the tractor. In addition, the lifting arms 16.1, 16.2 and even more especially their ends opposite to the rotating frame 24 can be raised in order to alter the position of the coupling clamps 26 vertically, using the second operating devices 48. Here the term vertical refers to the vertical direction of the chassis 32 of the tractor. The lifting arms 16.1, 16.2 then also rotate relative to the rotating frame 24 at the horizontal pivots 37. Here the terms vertical and horizontal refer more generally to the directions relative to the base plane defined by the work machine.

The implement 30 attached to the lifting arms 16.1, 16.2 and even more particularly to its coupling clamps 26 is now a ploughing blade 42. The front lifting device 10 is used generally to attach implements 30 to the tractor. Such implements 30 are used, for example, in real-estate maintenance and also in agriculture, such as, for example, in hay mowing.

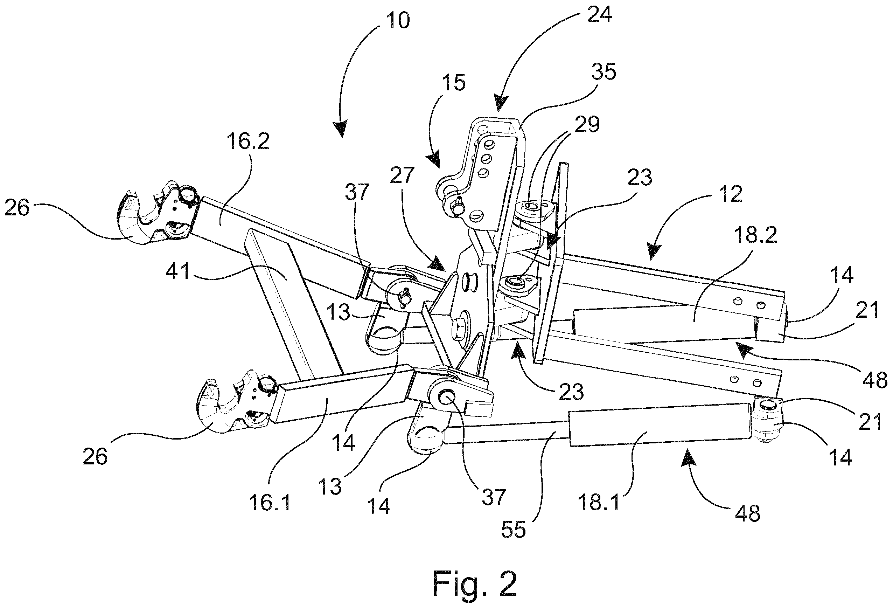

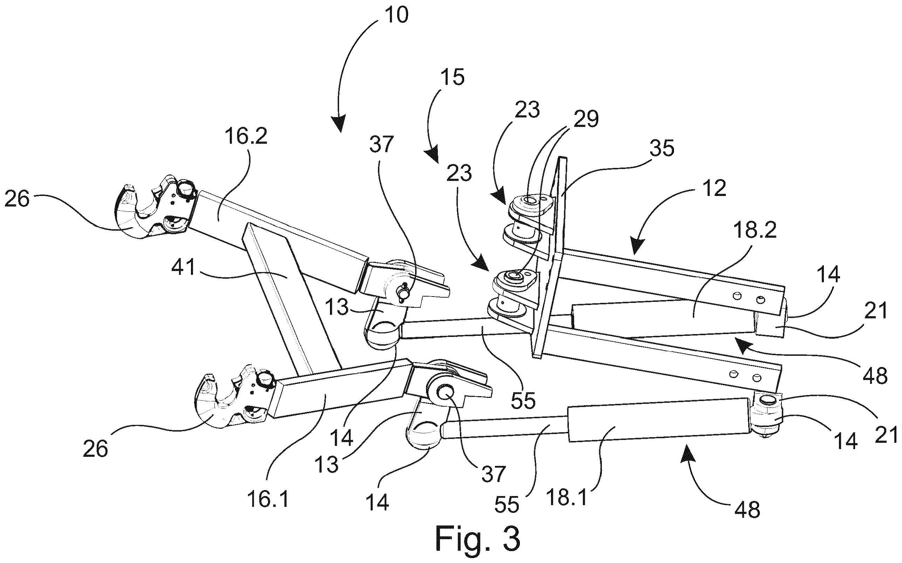

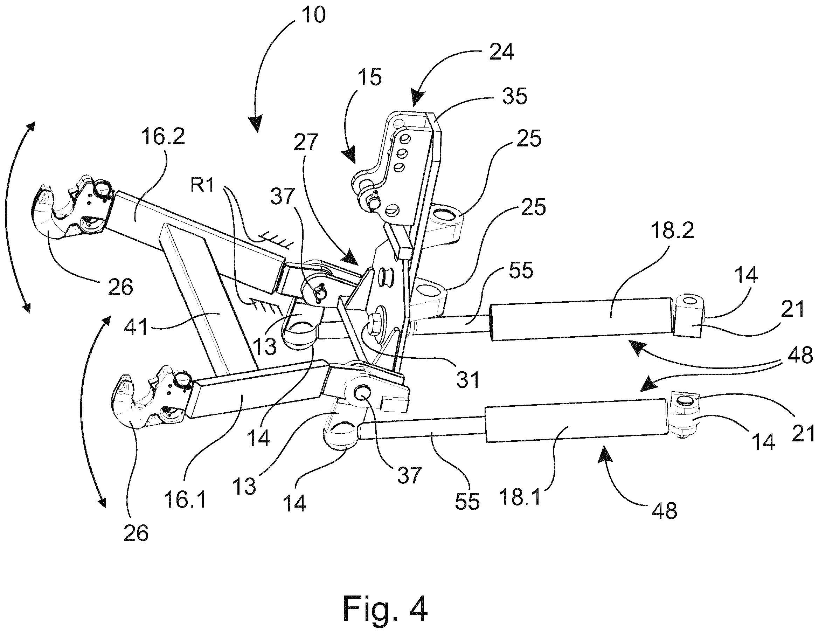

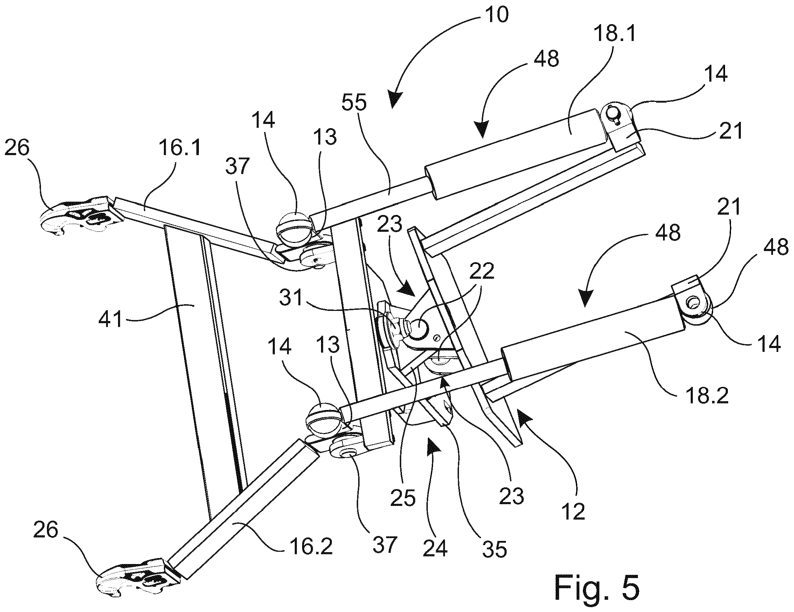

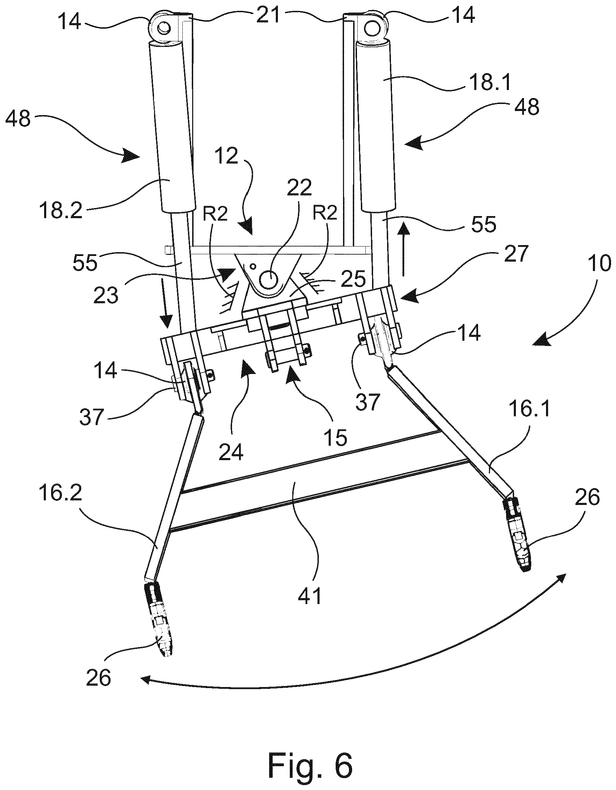

Figures 2 - 6 show one example of the front lifting device 10 according to the invention. Figure 2 shows an angled side view of the front lifting device 10 separated from the work machine 28, Figure 3 the front lifting device 10 without the rotating frame 24, Figure 4 the front lifting device 10 without the support frame 12, Figure 5 the front lifting device 10 seen from beneath, and Figure 6 the front lifting device 10 seen from on top when the lifting arms 16.1, 16.2 are turned laterally. Figures 2 - 6 do not show the mechanical limiters (R1 and R2), by which the rotation zone of the rotating frame 24 is limited horizontally around the vertical shaft (pin) 22 and the rotation zone of the lifting arms 16.1 and 16.2 is limited around the horizontal pivots 37 (pins). The stroke of the operating devices 48, more specifically the hydraulic cylinders 18.1 and 18.2, is arranged in such a way that in the extreme positions of the lifting movement or rotation there is always enough of the stroke left to carry out other operations, preferably 20 - 50%. In addition to the components already referred to above, the front lifting device 10 includes at least one attachment point 15 for at least one pushing arm (not shown), by which the implement 30 can be attached to the front lifting device 10 in addition to the lifting arms 16.1, 16.2. There is also an attachment point 15 in the rotating frame 24. The pushing arm and lifting arms 16.1, 16.2 form together attachment means for the implement 30, for example according to the three-point attachment device principle. The front lifting device 10 can also include a power take-off (not shown), by which the implement 30 receives any power it may need. As an example, in one front lifting device the rotation zone of the rotation device was 35° in each direction and the lifting 70°, so that the stroke of the cylinders needs to be at a maximum angle 50 % lifting/lowering. Generally 20 - 50 % of the stroke is reserved for the second operation.

The first and second operating devices 48 for operating the lifting arms 16.1, 16.2 and rotating the rotating frame 24 are together a first and second hydraulic cylinder 18.1, 18.2. Of these, the first hydraulic cylinder 18.1 is connected between the support frame 12 and the first lifting arm 16.1. Correspondingly, the second hydraulic cylinder 18.2 is connected between the support frame 12 and the second lifting arm 16.2.

Thus each of the hydraulic cylinders 18.1, 18.2 is fitted directly between the support frame 12 and the first and second lifting arms 16.1, 16.2 in order to act on the lifting arms 16.1, 16.2 and also the rotating frame 24.

The control means 11 include in turn a set of valves 52, which is arranged to direct the operating power optionally either in parallel to the first and second hydraulic cylinders 18.1, 18.2, or crosswise to at least one hydraulic cylinder 18.1, 18.2. One example of an embodiment of the set of valves 52 is described slightly later in this application.

In the embodiment described, the hydraulic cylinders 18.1, 18.2 for operating the lifting arms 16.1, 16.2 are attached to the support frame 12 in order to lift the lifting arms 16.1, 16.2 by the pushing movement P they create. The hydraulic cylinders 18.1, 18.2 are then mainly horizontal. In addition, in this case the hydraulic cylinders 18.1, 18.2 are also below the lifting arms 16.1, 16.2 and also the support frame 12, that is between the ground surface and the tractor over all of their main length. In addition, the hydraulic cylinders 18.1, 18.2 are also more in the longitudinal direction of the work machine 28 than in its transverse direction.

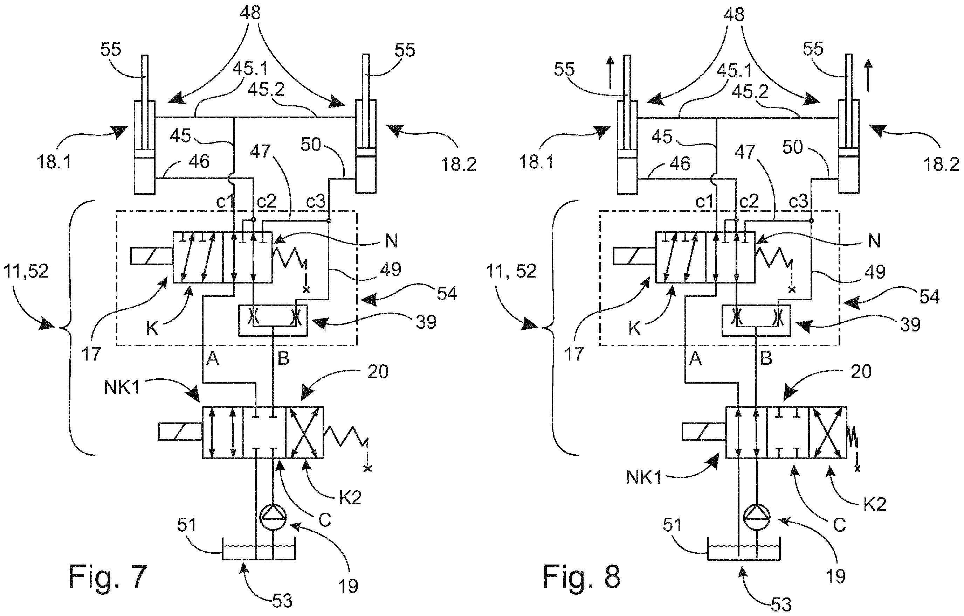

Figure 7 shows one example of the control means 11 for operating the lifting arms 16.1, 16.2. The front lifting device 10 includes in addition a set of valves 52 as control means 11 for operating the hydraulic cylinders 18.1, 18.2 alternatively in parallel for lifting and lowering both lifting arms 16.1, 16.2 or, for example, on one-sided for rotating both lifting arms 16.1, 16.2 laterally in the desired common direction. In one-sided operation the pressure can be led to only one hydraulic cylinder 18.1, 18.2, for example, to its piston side. Thus the both movements of the lifting arms 16.1, 16.2, their lifting and also lateral rotation, can surprisingly be performed by using joint hydraulic cylinders 18.1, 18.2. Thus, the hydraulic cylinders 18.1, 18.2 are made multi-purpose in the front lifting device 10. The operation of the control devices 11 is described slightly later in this application.

The hydraulic cylinders 18.1, 18.2 are fitted to the lifting arms 16.1, 16.2 next to the horizontal pivot 37. Thus their power is directed to an advantageous point relative to the lifting arms 16.1, 16.2 in terms of both lifting and also rotation. One way to fit the hydraulic cylinders 18.1, 18.2 to the lifting arms 16.1, 16.2 is to arrange attachments 13, more generally a lifting lug, to the lifting arms 16.1, 16.2, in order to connect the operating devices 48 to the lifting arms 16.1, 16.2. Now the attachments 13 point under the lifting arms 16.1, 16.2. Equally, the attachments 13 could also point above the lifting arms 16.1, 16.2, i.e. in an opposite way to the attachments 13 now shown in the figures. This increases the ground clearance of the front lifting device 10. The pulling movement created by the piston rods 55 of the hydraulic cylinders 18.1, 18.2 is then performed to raise the ends of the lifting arms 16.1, 16.2 upwards. Correspondingly, lugs 21 acting as attachments and protruding from the support frame 12 to the sides of the work machine 28 are here fitted to the support frame 12 to connect the hydraulic cylinders 18.1, 18.2 to the support frame 12 and thus also to the work machine 28.

The hydraulic cylinders 18.1, 18.2 can be connected to the support frame 12 and/or to the lifting arms 16.1, 16.2, for example, through a ball joint 14 arranged in the attachments 13, 21. The attachment 13 then forms at least part of the ball joint 14. Thus a widely-moving pivot is obtained at both ends of the operating devices 48, which for its part permits the movement of the lifting arms 16.1, 16.2, taking place using the hydraulic cylinders 18.1, 18.2, both horizontally and also vertically. The ball joint 14 is arranged to permit the hydraulic cylinders the lifting movement of the lifting arms 16.1, 16.2 and also the area of movement required by their rotation.

The ball joint arranged to the attachment 13 can be implemented, for example, by means of a ball joint in the lifting-arm side of the joint. It can then have, for example, a construction like that of a trailer's towing ball. Then, for example, in an upward-facing embodiment of the attachment, the lifting arms 16.1, 16.2 includes upward-facing pins fitted to them as attachments. At the end of the pin is a spherical coupling ball. Correspondingly, at the ends of the piston rods 55 of the hydraulic cylinders 18.1, 18.2 there is then a hollow coupling element, the cup part of which opens downwards. The cup part couples pivotedly to the coupling ball and thus permits it to move to a wide extent. Thus the coupling element is able to rotate relative to the coupling ball. In addition, the front lifting device 10 also includes mechanical limiters to restrict movement at the extreme points. Alternatively, the attachment and thus the ball joint may also be implemented using a pivot ball arranged in a loop, at least partly.

According to another embodiment, instead of the ball joint 14 shown as an example in the figures, it is also possible to use a universal joint in one or more joints of the hydraulic cylinders 18.1, 18.2 with the lifting arms 16.1, 16.2 and/or support frame 12. Then, for example in the joint on the side of the lifting arms 16.1, 16.2, the attachment includes a vertical shaft arranged in the upper edge of the lifting arm 16.1, 16.2 and a fork with an arm fitted to it. Thus the attachment is arranged to form at least part of the universal joint. The fork forms a lug and is rotatably pivoted by the arm to the vertical shaft. The fork can then rotate laterally. In addition, the fork opens towards the hydraulic cylinders 18.1, 18.2. The horizontal shaft is, in turn, fitted between the prongs of the fork. The ends of the hydraulic cylinders 18.1, 18.2 are, for example, pivoted to the horizontal shaft by the loops in the ends of the pistons rods 55, i.e. the horizontal shaft runs through the loop. Between the loop and the horizontal shaft there can be, for example, a ball joint. On the other hand, the horizontal shaft too can rotate circumferentially relative to the fork.

One exemplary way to attach the rotating frame 24 to the support frame 12 is to fit one or more separate pairs of lugs 23 to the support frame 12 for the attachment of the rotating frame 24. In the embodiment shown, there are two pairs of lugs 23 and they are at a distance from each other vertically. Between the lug pairs 23 there can be a sleeve mounting, in which there are bearings 29 for the vertical shaft 22 running through it. Correspondingly, one or more attachment lugs 25 are fitted to the rotating frame 24. They are dimensioned and set in the rotating frame 24 in such a way that they fit the pairs of lugs 23 of the support frame 12. This securely attaches the rotating frame 24 to the support frame, but also permits the easy rotation of the rotating frame 24 divided into parts and, in addition, also the use of shorter vertical shafts 22.

The rotating frame 24 also includes an attachment piece 27 attached to the underside of the frame part 35 for attaching the lifting arms 16.1, 16.2 to the rotating frame 24. The attachment piece 27 is secured to the frame part 35 of the rotating frame 24 by attachment bolts 31. The horizontal pivot 37 is formed on the lugs visible in Figure 3, which can be welded onto the transverse beam of the attachment piece 27. In the attachment piece 27 there are lug pairs 33, in which the rotating horizontal pivot 36 of the lifting arms 16.1, 16.2 is formed for raising and lowering their ends next to the coupling clamp 26, relative to the rotating frame 24.

Figures 7 - 10 show one exemplary way to implement the control means 11 of the hydraulic cylinders 18.1, 18.2 and the control of the hydraulic cylinders 18.1, 18.2 achieved using them in order to achieve the various functions of the lifting arms 16.1, 16.2 in the case of the embodiment of the front lifting device 10 shown in the figures in the present application. The hydraulic cylinders 18.1, 18.2 can be double-acting in their operating principle. Although the set of valves 52 shown in the embodiment example does not lead a pressurized medium to the piston-rod side of the hydraulic cylinders 18.1, 18.2, nevertheless in this case double-acting hydraulic cylinders 18.1, 18.2 are used to permit the smooth operation of the lifting device and to permit, for example, the lateral rotation of the lifting arms 16.1, 16.2 from one side to the other. In an as such known manner the hydraulic cylinders 18.1, 18.2 have an external cylindrical component, inside which is a moving piston connected to a piston rod 55 that protrudes from the cylindrical component. The flow lines of the pressurized medium are then connected to the hydraulic cylinders 18.1, 18.2 on the piston-rod 55 side and also to the opposite side of the piston relative to the piston rod 55. Both flow lines are connected, for example, to the cylindrical component of the hydraulic cylinders 18.1, 18.2.

In the embodiment shown, the set of valves 52 belonging to the control means 11 includes a 6/2 directional control valve 17 connected between the pressurized-medium source 53 and the hydraulic cylinders 18.1, 18.2. Now the pressurized-medium source 53 includes a tank 51, in which there is hydraulic oil, and a pump 19, which pressurizes the hydraulic oil. By means of the first position N of the directional control valve 17, which has two positions (N and K), both lifting arms 16.1, 16.2 are made to rise, i.e. the operating power is directed to both hydraulic cylinders 18.1, 18.2 in parallel. By means of the second position K of the directional control valve 17 the lifting arms 16.1, 16.2 are in turn made to rotate, i.e. the operating power is directed crosswise to at least one hydraulic cylinder. On a more general level instead of the directional control valve 17 shown it is also possible to speak of a device for dividing the operation of one hydraulic cylinder to two hydraulic cylinders.

In addition, in the embodiment shown, the set of valves 52 belonging to the control means 11 also includes a control valve 20 connected between the 6/2 directional control valve 17 and the pressurized-medium source 53. The control valve 20 can have three positions (NK1, C, and K2). The control valve 20 acts as the main valve in the set of valves 52. In position C it is closed. In position NK1 it either raises both lifting arms 16.1, 16.2 or then turn then to one side, depending on the position of the directional control valve 17. In position K2 it is used to perform the turning of the lifting arms 16.1, 16.2 to the other side, the directional control valve 17 then being in the position K. Thus in the control valve 20 there is a plugged position C, a direct through-flow position NK1, and a cross-connected position K2, in order to control the flow going to and coming from the hydraulic cylinders 18.1, 18.2.

Between the directional control valve 17 and the control valve 20, more generally the set of valves 52 belonging to the control means 11, there is now also a flow splitter 39. The flow splitter 39 is in the input connector A of the directional control valve 17. It is used to ensure, for example, that the lifting arms 16.1, 16.2 lift evenly, even though the load they carry is not balanced. The directional control valve 17 and the flow splitter 39 can form a single compact component 54.

In the following, the control of the operation of the front lifting device 10 and more specifically of its lifting arms 16.1, 16.2 is described by means of as an exemplary embodiment described set of valves 52 belonging to the control means 11. The pipelines going from the valve totality formed by the 6/2 directional control valve 17 and the flow splitter 39 to the hydraulic cylinders 18.1, 18.2 are divided in such a way that pipeline 45, from which pipelines 45.1, 45.2 divide to the cylindrical components of both hydraulic cylinders 18.1, 18.2 on the side of their piston rods, starts from connector c1. This also permits the flow of the medium between the piston-rod sides of the hydraulic cylinders 18.1, 18.2, when the directional control valve 17 is closed in the position K in the case of this medium connection c1. Pipeline 46, for its part, starts from connector c2 of the directional control valve 17 and connects to the cylindrical component of the first hydraulic cylinder 18.1 to the opposite side of the piston relative to the piston rod. Pipeline 47, to which the pipeline 49 coming from the flow splitter 39 is connected, starts from connector c3 of the directional control valve 17. Pipeline 50, which connects to the cylindrical component of second hydraulic cylinder 18.2 on the opposite side of its piston relative to the piston rod, is connected to pipelines 47 and 49.

When the control valve 20 is in the plugged, i.e. the closed position C shown in Figure 7, the holding of the position is achieved by means of the hydraulic cylinders 18.1, 18.2. When the control valve 20 is changed to the position NK1 permitting a through flow according to Figure 8, and the directional control valve 17 is also in the position N permitting a through flow, the simultaneous lifting of both lifting arms 16.1, 16.2 is achieved, i.e. their rotation relative to the horizontal pivots 37 fitted to the rotating frame 24. It is then possible to also speak of the operating power direction being in parallel to both hydraulic cylinders 18.1, 18.2. Medium pressurized by the pump 19 is then fed from the control valve 20 through the control valve 20 to the flow splitter 39. At the flow splitter 39 the pressurized medium is divided into the second input of the directional control valve 17 and the pipeline 49, which bypasses the directional control valve 17. From the directional control valve's 17 connection c2 the pressurized medium is led by the pipeline 46 to the piston side of the first hydraulic cylinder 18.1. The pressurized medium is led by the pipeline 49 through the pipeline 50 to the piston side of the second hydraulic cylinder 18.2. As a result of this a pushing movement P is directed by both hydraulic cylinders 18.1, 18.2 to the lifting arms 16.1, 16.2. Correspondingly, at the same time medium can be led from the directional control valve's 17 connector c1 from the piston-rod side of the hydraulic cylinders 18.1, 18.2 through the directional control valve's 17 connector c1 to the connector A, from which the medium returns through the control valve 20 to the medium tank 51.

The lowering of the lifting arms 16.1, 16.2 can take place for its part, for example, aided by the load carried by them. On the other hand, the lowering of the lifting arms 16.1, 16.2 can also take place aided by the operating power formed by the pressurized medium. The directional control valve 17 is then in the position N and the control valve 20 in the position K2. The pressurized medium is then led to the piston-rod side of both hydraulic cylinders 18.1, 18.2.

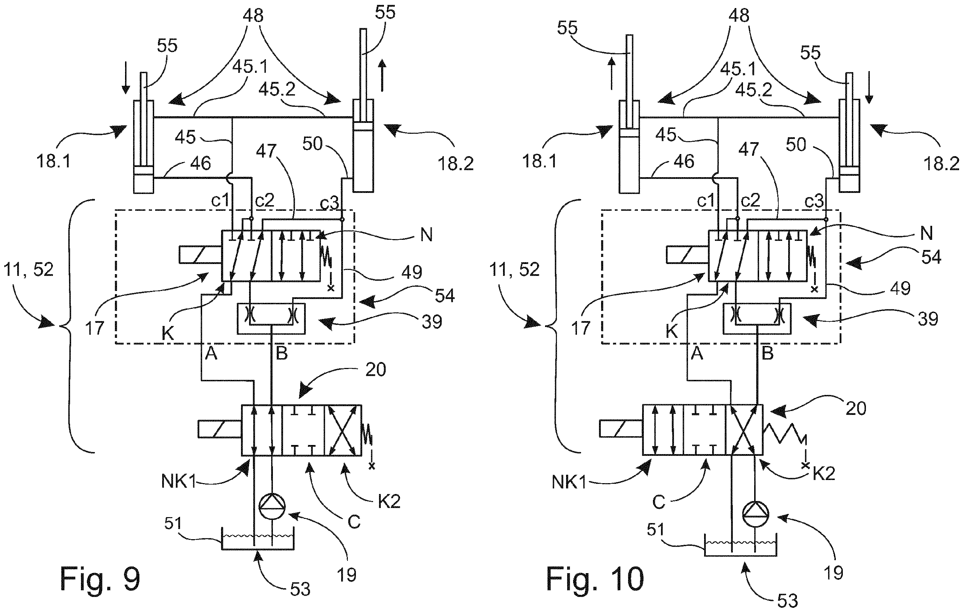

When the control valve 20 is in the position NK1 permitting through flow according to Figure 9 and the directional control valve 17 in the position K, in which the directional control valve's 17 connectors c2 and c3 are connected to the flow ducts 46, 47 going to the hydraulic cylinders 18.1, 18.2, the rotation of the lifting arms 16.1, 16.2 to the left is achieved. The directional control valve's 17 connector c1 is then plugged and pressurized medium is fed from connector c3 through pipeline 47 and the following pipeline 50 to the piston side of the second hydraulic cylinder 18.2. In addition, pressurized medium is also fed to the piston side of the second hydraulic cylinder 18.2 directly through the flow splitter 39 along pipeline 49 and the following pipeline 50. This pushes the piston rod 55 of the second hydraulic cylinder 18.2 outwards and the piston rod 55 of the first hydraulic cylinder 18.1 in turn inwards. Correspondingly, medium is then led from the directional control valve's 17 connector c2 away from the piston side of the first hydraulic cylinder 18.1 through the directional control valve's 17 connector A. Because the directional control valve's 17 connector c1 is now closed, medium cannot leave the piston-rod side of hydraulic cylinders 18.1, 18.2 along pipeline 45. It can then change place between hydraulic cylinders 18.1, 18.2 along pipelines 45.1 and 45.2. Thus, the medium transfers from the piston-rod side of the second hydraulic cylinder 18.2 along pipeline 45.2, 45.1 to the piston-rod side of the first hydraulic cylinder 18.1 and the volumes of the piston-rod sides correspondingly change. The transfer of medium from one cylinder 18.2, 18.1 to the other creates operating power in the first hydraulic cylinder 18.1 and its piston rod 55 to sink inwards, in addition to the piston rods 55 being mechanically connected to each other.

When the control valve 20 is in the position K2 according to Figure 10 and the directional control valve 17 in the position K, in which the directional control valve's 17 connectors c2 and c3 are connected to the flow ducts 46, 47 going to the hydraulic cylinders 18.1, 18.2, an inverse operation of the lifting arms 16.1, 16.2 to the situation of Figure 9 is achieved, i.e. rotation to the right. The directional control valve's 17 connector c1 is again plugged and pressurized medium is fed from connector c2 along pipeline 46 to the piston side of the first hydraulic cylinder 18.1. This pushes the piston rod 55 of the first hydraulic cylinder 18.1 out of the cylindrical component and the piston rod 55 of the second hydraulic cylinder 18.2 into its cylindrical component. Correspondingly, medium is then led along pipelines 50, 47 through the directional control valve's 17 connector c3 from the piston side of the second hydraulic cylinder 18.2 through the connector B of the directional control valve 17. Similarly medium is also led away from the piston side of the second hydraulic cylinder 18.2 along pipeline 50 and the following pipeline 49 past the directional control valve 17, i.e. directly to the flow splitter 39. Because the directional control valve's 17 connector c1 is again now closed, in this case the medium cannot even exit from the piston-rod sides of the hydraulic cylinders 18.1, 18.2 along pipeline 45. It then only changes place between the hydraulic cylinders 18.1, 18.2 along pipelines 45.1 and 45.2. Thus, the medium transfers from the piston-rod side of the first hydraulic cylinder 18.1 along pipelines 45.1, 45.2 to the piston-rod side of the second hydraulic cylinder 18.2 as the volumes change. Thus, in both rotations the set of valves 52 directs the operating power crosswise to at least one hydraulic cylinder 18.1, 18.2.

As a result of the connections shown in Figures 9 and 10, the rotating frame 24 is rotated relative to the support frame 12 and also relative to the tractor. The lifting arms 16.1, 16.2, rotate together with the rotating frame 24, so that the lifting arms 16.1, 16.2 are also rotated relative to the support frame 12.

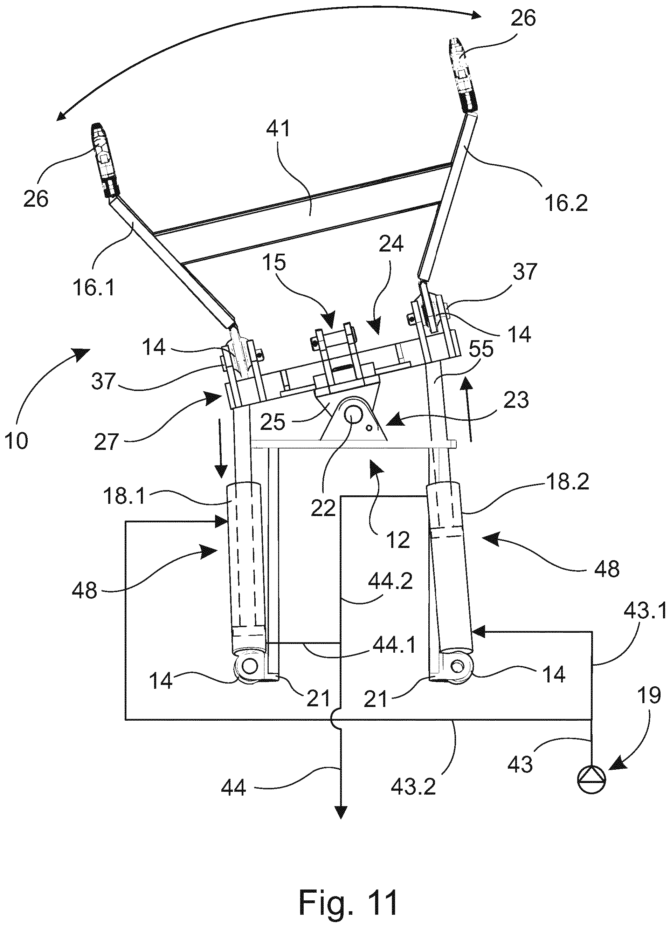

Figure 11 shows yet another alternative pipe arrangement for operating the hydraulic cylinders 18.1, 18.2. In this connection the operating power created by the pressure medium is directed to the both hydraulic cylinders 18.1, 18.2 on their opposite sides. Figure 11 shows a situation, in which the lifting arms 16.1, 16.2 are rotated seen from above and the work machine 28 side to the left. Pressurized medium is then led from the pump 19 along line 43, from which it is divided to sub-lines 43.1, 43.2. In line 43.1 it is led to the piston side of the second cylinder 18.2 and in line 43.2 to the piston-rod side of the first cylinder 18.1. The piston rod 55 of the second cylinder 18.2 then pushes out of its cylindrical component and the piston rod 55 of the first cylinder 18.1 in turn sinks into its cylindrical component. The opposite operation is created by changing the feed of the operating power to line 44. Only the lifting of the lifting arms 16.1, 16.2 the connection requires one or more valves, which in not shown in the figure. The operating power is then again fed to the piston side of both cylinders 18.1, 18.2. On the piston-rod side the medium can move from one cylinder to the other or then it can be led away from both cylinders.

One versed in the art will understand that in the case of the control means 11 there are yet other ways to implement the movement of the cylinders 18.1, 18.2 and the operations created by them, i.e. the lifting and rotation of the lifting arms. The set of valves 52 can also include the shock valves needed to receive pressure shocks.

## Claims

1. A front lifting device of a work machine, which includes
- a support frame (12), by which the front lifting device (10) is to be attached to the chassis (32) of the work machine (28),
- a rotating frame (24) fitted to the support frame (12) rotatably in the horizontal direction,
- a first and a second lifting arm (16.1, 16.2) at a distance from each other laterally pivoted to the rotating frame (24) by means of horizontal pivots (37) in order to permit the vertical movement of the lifting arms (16.1, 16.2),
- first operating devices (48) for rotating the rotating frame (24),
- second operating devices (48) connected to the lifting arms (16.1, 16.2) in order to lift the lifting arms (16.1, 16.2),
- control means (11) for controlling the operating power to the first and second operating devices (48),
**characterized in that**
- the first and second operating device (48) for operating the lifting arms (16.1, 16.2) and rotating the rotating frame (24) are together a first and second hydraulic cylinder (18.1, 18.2), of which
- the first hydraulic cylinder (18.1) is connected between the support frame (12) and the first lifting arm (16.1),
- the second hydraulic cylinder (18.2) is connected between the support frame (12) and the second lifting arm (16.2),
- the control means (11) include a set of valves (52), which is arranged to direct the operating power optionally either in parallel to the first and second hydraulic cylinders (18.1, 18.2) or crosswise to at least one hydraulic cylinder (18.1, 18.2).

2. The front lifting device of a work machine according to Claim 1, **characterized in that** the hydraulic cylinders (18.1, 18.2) are connected to the lifting arms (16.1, 16.2) next to the horizontal pivot (37).

3. The front lifting device of a work machine according to Claim 1 or 2, **characterized in that** attachments (13) are arranged in the lifting arms (16.1, 16.2) for connecting the hydraulic cylinders (18.1, 18.2) to the lifting arms (16.1, 16.2) .

4. The front lifting device of a work machine according to any of Claims 1 - 3, **characterized in that** the hydraulic cylinders (18.1, 18.2) are connected to the support frame (12) and/or the lifting arms (16.1, 16.2) by means of a ball joint (14).

5. The front lifting device of a work machine according to Claim 4, **characterized in that** the attachment (13) is arranged to form at least part of the ball joint (14).

6. The front lifting device of a work machine according to any of Claims 1 - 5, **characterized in that** the hydraulic cylinders (18.1, 18.2) are connected to the support frame (12) and/or the lifting arms (16.1, 16.2) by means of a universal joint.

7. The front lifting device of a work machine according to Claim 6, **characterized in that** the attachment (13) is arranged to form at least part of the universal joint.

8. The front lifting device of a work machine according to any of Claims 1 - 7, **characterized in that** the hydraulic cylinders (18.1, 18.2) are double-acting.

9. The front lifting device of a work machine, according to any of Claims 1 - 8, **characterized in that** the set of valves (52) includes a 6/2 directional control valve (17) fitted between the pressurized-medium source (53) and the pressurized-medium connectors of the hydraulic cylinders (18.1, 18.2) for alternatively raising the lifting arms (16.1, 16.2) or rotating the rotating frame (24) to one side.

10. The front lifting device of a work machine according to Claim 9, **characterized in that** the set of valves (52) includes in addition a control valve (20) connected between the 6/2 directional control valve (17) and the pressurized-medium source (53), for arranging the 6/2 directional control valve (17) for also rotating the rotating frame (24) to the other side.

11. The front lifting device of a work machine according to any of Claims 1 - 10, **characterized in that** the set of valves (52) includes a flow splitter (39) fitted between the control valve (20) and the directional control valve (17) for balancing the lifting of the lifting arms (16.1, 16.2).

12. The front lifting device of a work machine according to any of Claims 1 - 11, **characterized in that** the front lifting device (10) includes mechanical limiters (R1, R2) for limiting the area of rotation of the rotating frame (24) around the vertical shaft (22) and the area of rotation of the lifting arms (16.1, 16.2) around each horizontal pivot (37) and the stroke of the hydraulic cylinders (18.1, 18.2) is arranged in such a way, that in the extreme positions of the lifting movement or the rotation there is always stroke left for the other operation.

13. A work machine, which includes a front lifting device (10), **characterized in that** the front lifting device (10) is according to any of Claims 1 - 12.

## Patentansprüche

1. Fronthubvorrichtung für eine Arbeitsmaschine, bestehend aus
- einem Stützrahmen (12), mit dem die Fronthubvorrichtung (10) am Fahrgestell (32) der Arbeitsmaschine (28) befestigt wird,
- einem Drehgestell (24), das am Stützrahmen (12) in horizontaler Richtung schwenkbar angebracht ist,
- einem ersten und einem zweiten Hubarm (16.1, 16.2), die in einem Abstand zueinander durch horizontale Drehgelenke (37) seitlich schwenkbar zum Drehgestell (24) angebracht sind, um die vertikale Bewegung der Hubarme (16.1, 16.2) zu ermöglichen,
- ersten Betätigungsvorrichtungen (48) zum Schwenken des Drehgestells (24),
- zweiten Betätigungsvorrichtungen (48), die an den Hubarmen (16.1, 16.2) zum Heben der Hubarme (16.1, 16.2) befestigt sind,
- Steuerelementen (11) zur Steuerung der Antriebsleistung für die ersten und zweiten Betätigungsvorrichtungen (48),
**dadurch gekennzeichnet, dass**
- die ersten und zweiten Betätigungsvorrichtungen (48) zum Betätigen der Hubarme (16.1, 16.2) und Schwenken des Drehgestells (24) gemeinsam die ersten und zweiten Hydraulikzylinder (18.1, 18.2) bilden, von denen
- der erste Hydraulikzylinder (18.1) zwischen dem Stützrahmen (12) und dem ersten Hubarm (16.1) befestigt ist,
- der zweite Hydraulikzylinder (18.2) zwischen dem Stützrahmen (12) und dem zweiten Hubarm (16.2) befestigt ist,
- die Steuerelemente (11) einen Ventilsatz (52) enthalten, der dafür ausgelegt ist, die Antriebsleistung entweder parallel zu den ersten und zweiten Hydraulikzylindern (18.1, 18.2) zu leiten oder wechselnd zu wenigstens einem Hydraulikzylinder (18.1, 18.2).

2. Fronthubvorrichtung einer Arbeitsmaschine nach Anspruch 1, **dadurch gekennzeichnet, dass** die Hydraulikzylinder (18.1, 18.2) an den Hubarmen (16.1, 16.2) neben dem horizontalen Drehgelenk (37) befestigt sind.

3. Fronthubvorrichtung einer Arbeitsmaschine nach Anspruch 1 oder 2, **dadurch gekennzeichnet, dass** an den Hubarmen (16.1, 16.2) Bindungen (13) zur Befestigung der Hydraulikzylinder (18.1, 18.2) an den Hubarmen (16.1, 16.2) angebracht sind.

4. Fronthubvorrichtung einer Arbeitsmaschine nach jedem der Ansprüche 1 - 3, **dadurch gekennzeichnet, dass** die Hydraulikzylinder (18.1, 18.2) am Stützrahmen (12) und/oder an den Hubarmen (16.1, 16.2) über ein Kugelgelenk (14) befestigt sind.

5. Fronthubvorrichtung einer Arbeitsmaschine nach Anspruch 4, **dadurch gekennzeichnet, dass** die Bindung (13) so ausgelegt ist, dass sie zumindest zum Teil das Kugelgelenk (14) bildet.

6. Fronthubvorrichtung einer Arbeitsmaschine nach jedem der Ansprüche 1 - 5, **dadurch gekennzeichnet, dass** die Hydraulikzylinder (18.1, 18.2) am Stützrahmen (12) und/oder an den Hubarmen (16.1, 16.2) über ein Universalgelenk befestigt sind.

7. Fronthubvorrichtung einer Arbeitsmaschine nach Anspruch 6, **dadurch gekennzeichnet, dass** die Bindung (13) so angeordnet ist, dass sie zumindest zum Teil das Universalgelenk bildet.

8. Fronthubvorrichtung einer Arbeitsmaschine nach jedem der Ansprüche 1 - 7, **dadurch gekennzeichnet, dass** die Hydraulikzylinder (18.1, 18.2) doppelwirkend sind.

9. Fronthubvorrichtung einer Arbeitsmaschine nach jedem der Ansprüche 1 - 8, **dadurch gekennzeichnet, dass** der Ventilsatz (52) ein 6/2-Wegeventil (17) enthält, das zwischen der Druckmediumsquelle (53) und den Druckmediumsanschlüssen der Hydraulikzylinder (18.1, 18.2) angebracht ist, um alternativ die Hubarme (16.1, 16.2) zu heben oder das Drehgestell (24) auf eine Seite zu schwenken.

10. Fronthubvorrichtung einer Arbeitsmaschine nach Anspruch 9, **dadurch gekennzeichnet, dass** der Ventilsatz (52) auch ein Regelventil (20) enthält, das zwischen dem 6/2-Wegeventil (17) und der Druckmediumsquelle (53) angeordnet ist, damit das 6/2-Wegeventil (17) auch veranlasst wird, das Drehgestells (24) auf eine Seite zu schwenken.

11. Fronthubvorrichtung einer Arbeitsmaschine nach jedem der Ansprüche 1 - 10, **dadurch gekennzeichnet, dass** der Ventilsatz (52) einen Strömungsteiler (39) enthält, der zwischen dem Regelventil (20) und dem Wegeventil (17) zum Hubausgleich für die Hubarme (16.1, 16.2) angebracht ist.

12. Fronthubvorrichtung einer Arbeitsmaschine nach jedem der Ansprüche 1 - 11, **dadurch gekennzeichnet, dass** die Fronthubvorrichtung (10) mechanische Begrenzer (R1, R2) zum Begrenzen des Drehbereichs des Drehgestells (24) um die vertikale Welle (22) enthält und des Drehbereichs der Hubarme (16.1, 16.2) um jedes horizontale Drehgelenk (37), und der Hub der Hydraulikzylinder (18.1, 18.2) so angeordnet ist, dass in den äußeren Positionen der Hubbewegung oder der Drehbewegung noch Hub für den anderen Betrieb vorhanden ist.

13. Eine Arbeitsmaschine mit einer Fronthubvorrichtung (10), **dadurch gekennzeichnet, dass** die Fronthubvorrichtung (10) eine Vorrichtung nach jedem der Ansprüche 1 - 12 ist.

## Revendications

1. Dispositif de levage frontal pour une machine de travail, comprenant
- un cadre de soutien (12), par l'intermédiaire duquel le dispositif de levage frontal (10) sera fixé au châssis (32) de la machine de travail (28),
- un cadre rotatif (24) fixé au cadre de soutien (12) pivotant horizontalement,
- un premier et un deuxième bras de levage (16.1, 16.2) espacés d'une certaine distance l'un de l'autre fixés latéralement de manière pivotante au cadre rotatif (24) au moyen de pivots horizontaux (37) de manière à permettre le mouvement vertical des bras de levage (16.1, 16.2),
- des premiers dispositifs de manœuvre (48) pour faire pivoter le cadre rotatif (24),
- des deuxièmes dispositifs de manœuvre (48) reliés aux bras de levage (16.1, 16.2) pour lever les bras de levage (16.1, 16.2),
- des moyens de commande (11) pour contrôler la puissance utile transmise aux premiers et deuxièmes dispositifs de manœuvre (48),
**caractérisé en ce que**
- les premier et deuxième dispositifs de manœuvre (48) pour commander les bras de levage (16.1, 16.2) et faire pivoter le cadre rotatif (24) constituent ensemble un premier et un deuxième vérins hydrauliques (18.1, 18.2), où
- le premier vérin hydraulique (18.1) relie le cadre de soutien (12) au premier bras de levage (16.1),
- le deuxième vérin hydraulique (18.2) relie le cadre de soutien (12) au deuxième bras de levage (16.2),
- les moyens de commande (11) incluent un ensemble de vannes (52), lequel est disposé de façon à transmettre la puissance utile soit en parallèle dans les premier et deuxième vérins hydrauliques (18.1, 18.2), soit transversalement dans au moins un vérin hydraulique (18.1, 18.2) .

2. Dispositif de levage frontal d'une machine de travail conformément à la revendication 1, **caractérisé en ce que** les vérins hydrauliques (18.1, 18.2) sont reliés aux bras de levage (16.1, 16.2) à côté du pivot horizontal (37).

3. Dispositif de levage frontal d'une machine de travail conformément à la revendication 1 ou 2, **caractérisé en ce que** des fixations (13) sont disposées dans les bras de levage (16.1, 16.2) pour relier les vérins hydrauliques (18.1, 18.2) aux bras de levage (16.1, 16.2).

4. Dispositif de levage frontal d'une machine de travail conformément à l'une quelconque des revendications 1 à 3, **caractérisé en ce que** les vérins hydrauliques (18.1, 18.2) sont fixés au cadre de soutien (12) et/ou aux bras de levage (16.1, 16.2) au moyen d'un joint à rotule (14).

5. Dispositif de levage frontal d'une machine de travail conformément à la revendication 4, **caractérisé en ce que** la fixation (13) est disposée de façon à former au moins une partie du joint à rotule (14).

6. Dispositif de levage frontal d'une machine de travail conformément à l'une quelconque des revendications 1 à 5, **caractérisé en ce que** les vérins hydrauliques (18.1, 18.2) sont fixés au cadre de soutien (12) et/ou aux bras de levage (16.1, 16.2) au moyen d'un joint universel.

7. Dispositif de levage frontal d'une machine de travail conformément à la revendication 6, **caractérisé en ce que** la fixation (13) est disposée de façon à former au moins une partie du joint universel.

8. Dispositif de levage frontal d'une machine de travail conformément à l'une quelconque des revendications 1 à 7, **caractérisé en ce que** les vérins hydrauliques (18.1, 18.2) sont à double effet.

9. Dispositif de levage frontal d'une machine de travail conformément à l'une quelconque des revendications 1 à 8, **caractérisé en ce que** l'ensemble de vannes (52) comprend un distributeur 6/2 (17) fixé entre la source de fluide sous pression (53) et les connecteurs à fluide sous pression des vérins hydrauliques (18.1, 18.2) pour lever les bras de levage en alternance (16.1, 16.2) ou faire pivoter le cadre rotatif (24) d'un côté.

10. Dispositif de levage frontal d'une machine de travail conformément à la revendication 9, **caractérisé en ce que** l'ensemble de vannes (52) comprend en plus une vanne de commande (20) fixée entre le distributeur 6/2 (17) et la source de fluide sous pression (53), pour disposer le distributeur 6/2 (17) de façon à ce qu'il fasse également pivoter le cadre rotatif (24) de l'autre côté.

11. Dispositif de levage frontal d'une machine de travail conformément à l'une quelconque des revendications 1 à 10, **caractérisé en ce que** l'ensemble de vannes (52) comprend un répartiteur de flux (39) fixé entre la vanne de commande (20) et le distributeur (17) pour équilibrer le levage des bras de levage (16.1, 16.2).

12. Dispositif de levage frontal d'une machine de travail conformément à l'une quelconque des revendications 1 à 11, **caractérisé en ce que** le dispositif de levage frontal (10) comprend des limiteurs mécaniques (R1, R2) pour limiter la zone de rotation du cadre rotatif (24) autour de l'arbre vertical (22) et la zone de rotation des bras de levage (16.1, 16.2) autour de chaque pivot horizontal (37) et la course des vérins hydrauliques (18.1, 18.2) est conçue de telle sorte que, dans les positions extrêmes du mouvement de levage ou de la rotation, il reste toujours suffisamment d'espace pour la course de l'autre opération.

13. Machine de travail, qui comprend un dispositif de levage frontal (10), **caractérisée en ce que** le dispositif de levage frontal (10) est conforme à l'une quelconque des revendications 1 à 12.
